# EUROPEAN PATENT APPLICATION

(11) **EP 4 645 948 A1**
(43) Date of publication of application: **05.11.2025**
(21) Application number: 23912191.6
(22) Date of filing: 26.12.2023
(51) Int. Cl.: H04W 28/084, H04W 88/14, H04W 92/24

(54) **CORE NETWORK NODE, COMMUNICATION SYSTEM, COMMUNICATION METHOD, AND PROGRAM**

(30) Priority: 28.12.2022 JP 2022211058
(71) Applicant: NEC Corporation, 108-8001 Tokyo (JP)
(72) Inventor: DEMPO Hiroshi, Tokyo 108-8001 (JP)
(74) Representative: Mathys & Squire
(86) International application number: PCT/JP2023/046784
(87) International publication number: WO 2024/143413

(57) **Abstract**

An object is to provide a core network node capable of suitably realizing load balancing, maintenance of service quality, and the like in providing an application service using a DNS. A core network node according to the present disclosure includes a reception unit configured to receive, from a core network node, a name resolution result including first identification information related to a network apparatus that provides an edge application service used by a first communication terminal in a group including a plurality of communication terminals; and a transmission unit configured to transmit second identification information corresponding to the group, to the core network node.

## Description

### Technical Field

The present disclosure relates to a core network node, a communication system, a communication method, and a program.

### Background Art

In recent years, application of a network technique called edge computing has been studied for cloud computing in which all information is aggregated in a cloud and data processing is executed in a high-performance server on the cloud. In the edge computing, processing such as data processing or data analysis is executed in a server arranged in a peripheral region of a device at a network terminal such as an Internet of Things (IoT) terminal. The server that has performed the data processing or the like transmits the processed or analyzed data to the cloud or the device. As a result, communication delay, reduction in network load, and the like can be realized.

Non Patent Literature 1 discloses a technique of realizing edge computing in a mobile network. For example, in the edge computing, an application service is provided by using a plurality of edge application servers (EAS) disposed at different locations. Here, a user equipment (UE) used as a generic name of a communication terminal in the 3rd generation partnership project (3GPP) (registered trademark) uses a domain name system (DNS) in order to discover the EAS.

Non Patent Literature 2 assumes a case where a plurality of UEs needs to use the same EAS in the edge computing. For example, in order to provide similar quality of service to a plurality of UEs moving in a certain direction and at a certain speed, it is assumed that a specific EAS handles a plurality of UEs.

### Citation List

### Non Patent Literature

Non Patent Literature 1: 3GPP TS 23.548 V17.4.0 (2022-09)
Non Patent Literature 2: 3GPP TR 23.700-48 V2.0.0 (2022-11)

### Summary of Invention

### Technical Problem

In a case where an application service is provided, a plurality of servers may provide one application service for the purpose of load balancing. As a specific load balancing technique, in a case where the DNS round robin is applied, different servers are notified to a plurality of communication terminals using the same application service. However, in such a case, there is a problem that services of similar quality may not be provided to a plurality of communication terminals using the same application service. On the other hand, in a case where the load balancing is not performed, there is a problem that the load is concentrated on a specific server, and the quality of service may be degraded.

An object of the present disclosure is to provide a core network node, a communication system, a communication method, and a program capable of suitably realizing load balancing, maintenance of service quality, and the like in providing an application service using a DNS.

### Solution to Problem

A core network node according to a first aspect of the present disclosure includes a reception unit configured to receive, from a first core network node, a name resolution result including first identification information related to a network apparatus that provides an edge application service used by a first communication terminal in a group including a plurality of communication terminals; and a transmission unit configured to transmit second identification information corresponding to the group, to the first core network node.

A core network node according to a second aspect of the present disclosure includes a transmission unit configured to transmit, to a first core network node, a name resolution result including first identification information related to a network apparatus that provides an edge application service used by a first communication terminal in a group including a plurality of communication terminals; and a reception unit configured to receive second identification information corresponding to the group, in which the transmission unit transmits the second identification information to the first communication terminal in a case where the second identification information is received.

A communication system according to a third aspect of the present disclosure includes a first core network node configured to transmit, to a second core network node, a name resolution result including first identification information related to a network apparatus that provides an edge application service used by a first communication terminal in a group including a plurality of communication terminals; and the second core network node configured to receive the name resolution result and transmit second identification information corresponding to the group to the first core network node, in which the first core network node transmits the second identification information to the first communication terminal in a case where the second identification information is received.

A communication method according to a fourth aspect of the present disclosure includes receiving, from a first core network node, a name resolution result including first identification information related to a network apparatus that provides an edge application service used by a first communication terminal in a group including a plurality of communication terminals; and transmitting second identification information corresponding to the group, to the first core network node.

A communication method according to a fifth aspect of the present disclosure includes transmitting, to a first core network node, a name resolution result including first identification information related to a network apparatus that provides an edge application service used by a first communication terminal in a group including a plurality of communication terminals; receiving second identification information corresponding to the group; and transmitting the second identification information to the first communication terminal.

A program according to a sixth aspect of the present disclosure causes a computer to execute receiving, from a first core network node, a name resolution result including first identification information related to a network apparatus that provides an edge application service used by a first communication terminal in a group including a plurality of communication terminals; and transmitting second identification information corresponding to the group, to the first core network node.

A program according to a seventh aspect of the present disclosure causes a computer to execute transmitting, to a first core network node, a name resolution result including first identification information related to a network apparatus that provides an edge application service used by a first communication terminal in a group including a plurality of communication terminals; receiving second identification information corresponding to the group; and transmitting the second identification information to the first communication terminal.

### Advantageous Effects of Invention

According to the present disclosure, it is possible to provide a core network node, a communication system, a communication method, and a program capable of suitably realizing load balancing, maintenance of service quality, and the like in providing an application service using a DNS.

### Brief Description of Drawings

Fig. 1 is a configuration diagram of a core network node according to the present disclosure.
Fig. 2 is a diagram illustrating a flow of communication processing according to the present disclosure.
Fig. 3 is a configuration diagram of a core network node according to the present disclosure.
Fig. 4 is a diagram illustrating a flow of communication processing according to the present disclosure.
Fig. 5 is a configuration diagram of a communication system according to the present disclosure.
Fig. 6 is a diagram illustrating a flow of name resolution processing according to the present disclosure.
Fig. 7 is a diagram illustrating a flow of name resolution processing according to the present disclosure.
Fig. 8 is a diagram illustrating a flow of name resolution processing according to the present disclosure.
Fig. 9 is a diagram illustrating a flow of name resolution processing according to the present disclosure.
Fig. 10 is a diagram illustrating an operation in a case where a UE according to the present disclosure performs movement.
Fig. 11 is a configuration diagram of a core network node according to the present disclosure.
Fig. 12 is a configuration diagram of a core network node according to the present disclosure.
Fig. 13 is a configuration diagram of a core network node according to the present disclosure.

### Example Embodiment

### (First Example Embodiment)

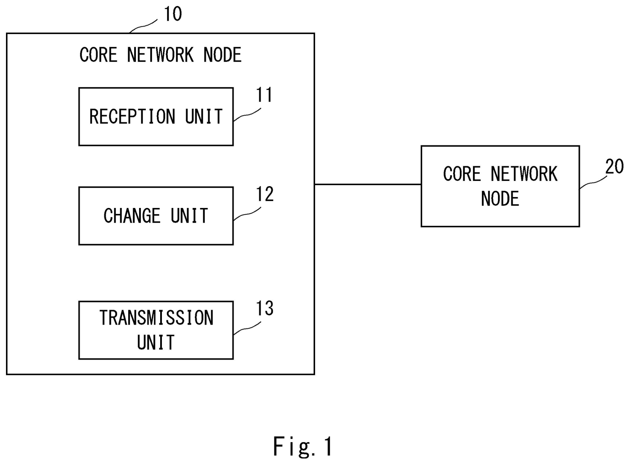

A configuration example of a core network node 10 will be described with reference to Fig. 1. The core network node 10 may be a computer apparatus that operates in a case where a processor executes a program stored in a memory. The core network node 10 may be, for example, a node constituting a mobile network. The node may correspond to a physical entity (apparatus) or a logical function (function). In addition, for example, the core network node may be a node that performs session management (session management).

The core network node 10 includes a reception unit 11, a change unit 12, and a transmission unit 13. The reception unit 11, the change unit 12, and the transmission unit 13 may be software components or modules whose processing is executed by causing the processor to execute the program stored in the memory. Alternatively, the reception unit 11, the change unit 12, and the transmission unit 13 may be hardware components such as circuits or chips.

The reception unit 11 receives, from a core network node 20, a name resolution result including first identification information related to a network apparatus that provides an edge application service used by a first communication terminal in a group including a plurality of communication terminals. The edge application service may be a communications service, a network service, or an application service provided by the application server to the communication terminal via the mobile network. In addition, the service may be a service (edge computing service) provided by using the edge computing. The group including a plurality of communication terminals may include, for example, a plurality of communication terminals using the same service.

The first identification information may be, for example, information obtained as a result of name resolution of the service information. The service information may be information indicating a service name. The information indicating the service name may be information uniquely identified in a mobile network or an edge computing environment. The information indicating the service name may be, for example, a fully qualified domain name (FQDN). The FQDN includes a domain name. The FQDN may further include a host name.

The name resolution may be processing of converting the service information into identification information of an apparatus (for example, a network apparatus), a network, or the like to which the communication terminal is connected. Alternatively, the name resolution may be processing of specifying identification information of an apparatus, a network, or the like to which the communication terminal is connected, from the service information. For example, DNS may be used for name resolution. The name resolution result may indicate, for example, identification information of an apparatus, a network, or the like. The reception unit 11 may receive the name resolution result from the core network node that has executed the name resolution processing or another core network node. The identification information may be referred to as address information. For example, the identification information may be an IP address related to the service information.

The change unit 12 changes the first identification information to second identification information. For example, the change unit 12 may change the first identification information specified by the name resolution processing to the second identification information according to a predetermined policy, a conversion rule, or the like. The change unit 12 may change the first identification information to the second identification information on the basis of change instruction information received from another apparatus (for example, the core network node 20 or the like). The second identification information indicates a server apparatus or a network different from the server apparatus or the network identified by the first identification information. The first identification information is an apparatus or the like to which the communication terminal is connected, and is associated with the communication terminal.

For example, the change unit 12 may change the first identification information different for each communication terminal using the same service, to the common second identification information. The first identification information different for each communication terminal means that different first identification information is allocated to each communication terminal. Alternatively, the change unit 12 may change the first identification information common to the same service information to the second identification information different for each communication terminal. The expression "different for each communication terminal" may include that the same identification information is associated with some communication terminals in a case where the number of pieces of identification information is less than the number of communication terminals. A plurality of communication terminals using the same service may be, for example, communication terminals belonging to the same group. In addition, a plurality of communication terminals using the same service may be further divided into subgroups according to the same division policy. For example, a plurality of communication terminals using the same service may be divided into subgroups formed for each area in which the communication terminals are positioned. Alternatively, a plurality of communication terminals using the same service may be divided into subgroups according to service quality such as delay time and throughput. For example, the communication terminals belonging to the same subgroup may request substantially the same service quality, or may receive substantially the same service quality.

The second identification information may be identification information corresponding to a group of communication terminals including a plurality of communication terminals. For example, in a case where an ID (hereinafter, also referred to as a group ID or group identification information) is assigned to a group of communication terminals, the second identification information may be identification information corresponding to the group ID or identification information associated with the group ID. The identification information corresponding to the group ID and/or the identification information associated with the group ID may be set in advance.

In addition, for example, the second identification information may be identification information for a communication terminal, on which name resolution is first executed, among a plurality of communication terminals belonging to a group. For example, in a case where a group of communication terminals is associated with a timer, the communication terminal on which the name resolution is first executed is the communication terminal on which the name resolution is first executed after the timer is started by some trigger (for example, the trigger may be reception or transmission of a certain message). The timer may be held by the core network node 10 or may be held by the communication terminal. In addition, the timer may be used to manage a period until the group ID is reset, that is, an expiration date of the group ID. For example, in a case where the core network node 10 receives a certain message, the timer is started, ended, or reset.

In addition, for example, the second identification information may be identification information that is first received as a result of name resolution for a plurality of communication terminals belonging to a group.

For example, the reception unit 11 receives a name resolution result for a first communication terminal apparatus in a group including a plurality of communication terminal apparatuses. In this case, the change unit 12 changes the first identification information included in the name resolution result for the first communication terminal apparatus, to the second identification information included in the name resolution result for a second communication terminal apparatus in a group including a plurality of communication terminal apparatuses.

The transmission unit 13 transmits the second identification information to the core network node 20. The core network node 20 may be a node that notifies the communication terminal of the name resolution result. The core network node 20 may be, for example, an apparatus that executes name resolution processing related to service information designated by the communication terminal.

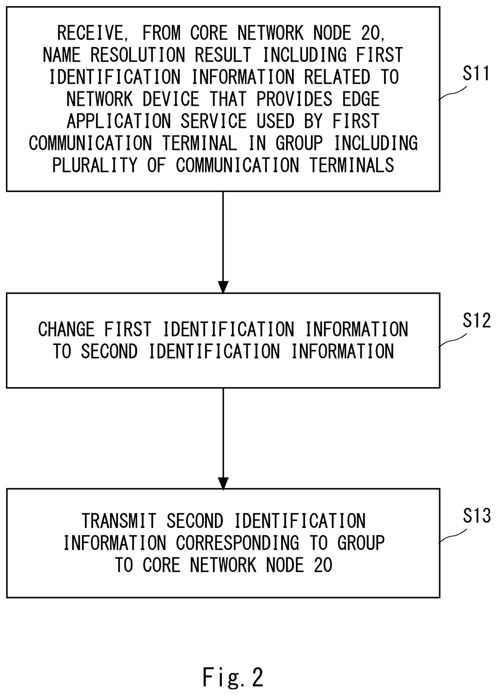

Next, a flow of communication processing in the core network node 10 will be described with reference to Fig. 2. First, the reception unit 11 receives, from a core network node 20, a name resolution result including first identification information related to a network apparatus that provides an edge application service used by a first communication terminal in a group including a plurality of communication terminals (S11). Next, the change unit 12 changes the first identification information to second identification information (S12). Next, the transmission unit 13 transmits the second identification information corresponding to a group, to the core network node 20 (S13).

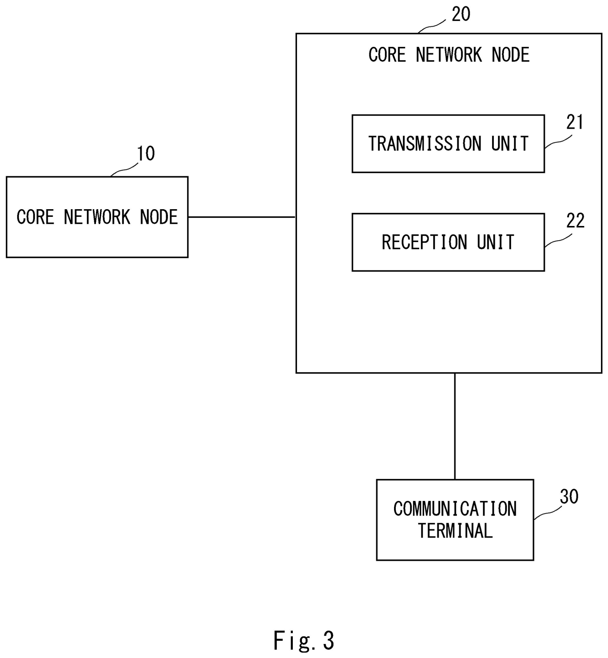

Next, a configuration example of the core network node 20 will be described using Fig. 3. The core network node 20 may be a computer apparatus that operates in a case where a processor executes a program stored in a memory. The core network node 20 may be, for example, a node constituting a mobile network. The node may correspond to a physical entity (apparatus) or a logical function (function).

The core network node 20 includes a transmission unit 21 and a reception unit 22. The transmission unit 21 and the reception unit 22 may be software components or modules whose processing is executed by causing the processor to execute the program stored in the memory. Alternatively, the transmission unit 21 and the reception unit 22 may be hardware components such as circuits or chips.

The transmission unit 21 transmits, to the core network node 10, the name resolution result including the first identification information related to the network apparatus that provides the edge application service used by the first communication terminal (for example, a communication terminal 30) in a group including a plurality of communication terminals. The core network node 20 may be a computer apparatus that operates in a case where a processor executes a program stored in a memory. The communication terminal 30 may be a mobile phone terminal, a smartphone terminal, a tablet terminal, an IoT terminal, a vehicle (an automobile, a motorcycle, or the like) equipped with a communication function, or may be a UE used as a general term for terminals in 3GPP.

The core network node 20 may execute the name resolution processing using, for example, another server apparatus. In a case where DNS is used for the name resolution, another server apparatus may be a DNS server.
Specifically, the core network node 20 transmits a DNS Query including the service information to the DNS server. Furthermore, the core network node 20 receives, from the DNS server, a DNS Response including identification information of an apparatus, a network, or the like to which the communication terminal 30 is connected.

In a case where the DNS server applies DNS round robin, the core network node 20 receives a DNS Response that includes different identification information from the DNS server. Specifically, the core network node 20 receives, from the DNS server, a DNS Response including different identification information for the DNS Query transmitted from the core network node 20 to the DNS server at different timings even with the same service information. In addition, in a case where the DNS server does not apply the DNS round robin, the core network node 20 receives a DNS Response including the same identification information for a DNS Query including the same service information.

The reception unit 22 receives the second identification information corresponding to the group. Furthermore, in a case where the second identification information is received, the transmission unit 21 transmits the second identification information to the communication terminal 30. That is, in the core network node 10, in a case where the first identification information is changed to the second identification information, the transmission unit 21 transmits the changed second identification information to the communication terminal 30. In a case where the same identification information as the first identification information is received from the core network node 10 or in a case where the identification information is not received from the core network node 10, the transmission unit 21 may transmit the name resolution result including the first identification information to the communication terminal 30. For example, the core network node 10 changes the first identification information included in the name resolution result for the first communication terminal, to the second identification information included in the name resolution result for the second communication terminal. In a case where the reception unit 22 receives the second identification information from the core network node 10, the transmission unit 21 transmits the name resolution result including the second identification information to the first communication terminal.

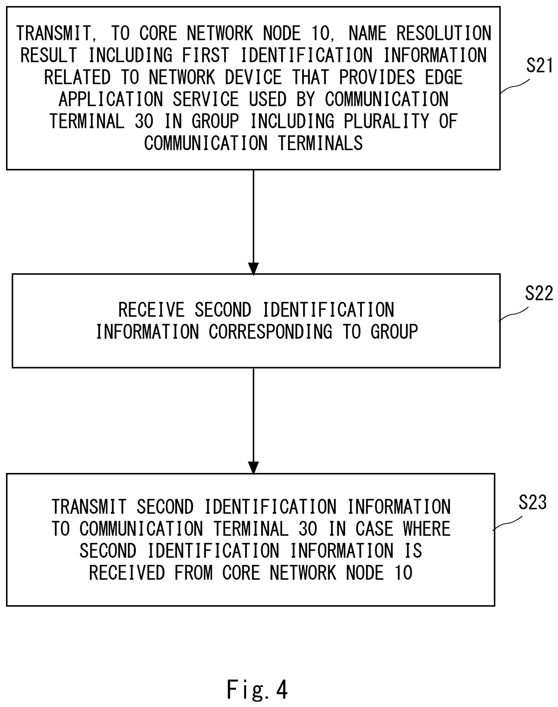

Next, a flow of communication processing in the core network node 20 will be described with reference to Fig. 4. First, the transmission unit 21 transmits the name resolution result including the first identification information to the core network node 10 (S21). The first identification information relates to the network apparatus that provides the edge application service used by the first communication terminal (for example, the communication terminal 30) in a group including a plurality of communication terminals. Next, the reception unit 22 receives the second identification information corresponding to the group (S22). Next, in a case where the second identification information is received from the core network node 10, the transmission unit 21 transmits the second identification information to the communication terminal 30 (S23).

As described above, the core network node 10 changes the identification information specified by the name resolution processing to other identification information, and transmits the changed identification information to the core network node 20. Furthermore, the core network node 20 transmits the changed identification information to the communication terminal 30. For example, the core network node 10 can designate a common server apparatus in a case where a service with a certain degree of service quality is provided to a plurality of communication terminals using the common server apparatus. Furthermore, in a case where load balancing is performed using a plurality of server apparatuses in a case where a certain service is provided, the core network node 10 can designate a plurality of server apparatuses such that a plurality of communication terminals is connected to different server apparatuses. As described above, by enabling the core network node 10 to change the identification information of the server apparatus specified by name resolution, it is possible to flexibly select an apparatus that provides a service. As described above, load balancing, maintenance of service quality, and the like can be suitably realized in providing the application service using the DNS.

### (Second Example Embodiment)

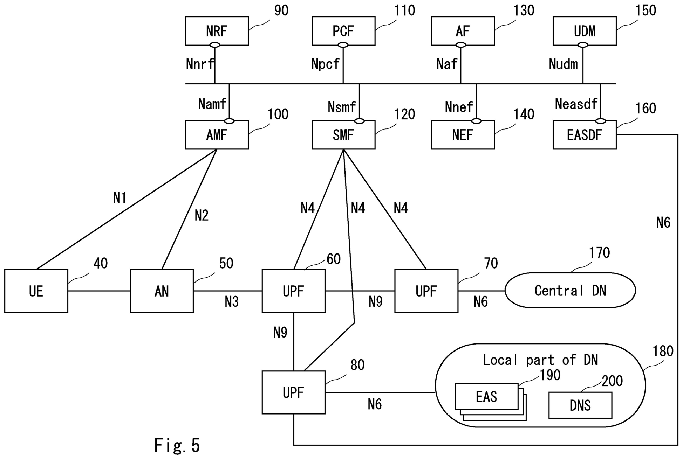

Next, a configuration example of a communication system will be described with reference to Fig. 5. The communication system in Fig. 5 includes a UE 40 and an access network (AN) 50. Furthermore, the communication system includes a user plane function (UPF) 60, a UPF 70, and a UPF 80 that mainly process user plane (UP) data. The UPF 70 is connected to a central data network (DN) 170. The UPF 80 is connected to a Local part of DN 180. Furthermore, the communication system mainly includes a network repository function (NRF) 90, an access and mobility management function (AMF) 100, a policy control function (PCF) 110, a session management function (SMF) 120, an application function (AF) 130, a network exposure function (NEF) 140, a unified data management (UDM) 150, and an edge application server discovery function (EASDF) 160, which mainly process control plane (CP) data.

Each component constituting the communication system in Fig. 5 may be a node. The node may correspond to a physical entity (apparatus) or a logical function (function).

The core network node 10 corresponds to, for example, the SMF 120. In addition, the core network node 20 corresponds to, for example, the EASDF 160. In addition, the communication terminal 30 corresponds to, for example, the UE 40.

The UPFs 60 to 80, the NRF 90, the AMF 100, the PCF 110, the SMF 120, the AF 130, the NEF 140, the UDM 150, and the EASDF 160 constitute a 5th Generation (5G) core network. A service-based architecture is applied to the NRF 90, the AMF 100, the PCF 110, the SMF 120, the AF 130, the NEF 140, the UDM 150, and the EASDF 160, and each of them is connected via a service-based interface. In the service-based interface, for example, a hypertext transfer protocol (HTTP) may be used. As the service interface, for example, Nnrf, Namf, Npcf, Nsmf, Naf, Nnef, Nudm, and Neasdf are defined.

A reference point is defined between nodes constituting the communication system. Specifically, N1 is defined between the UE 40 and the AMF 100. N2 is defined between the AN 50 and the AMF 100. N3 is defined between the AN 50 and the UPF 60. N4 is defined between the UPFs 60 to 80 and the SMF 120. N6 is defined between the UPF 70 and the Central DN 170, between the UPF 80 and the Local part of DN 180, and between the UPF 80 and the EASDF 160. N9 is defined among the UPF 60, the UPF 70, and the UPF 80.

The AN 50 includes at least one of a next generation (NG)-radio access network (RAN) and a non-3GPP AN, and is connected to the 5G core network. The AN 50 may be referred to as a 5G access network.

The UPF 60 operates as a point for the branching of sessions, dynamically or statically. The branching of sessions may be referred to, for example, as session breakout. The UPF 60 may be referred to as an uplink classifier/branching point (UL CL/BP). The UPF 70 and the UPF 80 terminate a protocol data unit (PDU) session and interconnect with an external network as anchor points in a 5G system. Among the UPFs, in particular, a UPF that terminates the PDU session and is connected to the DN is a PDU Session Anchor (PSA)-UPF. In the PSA-UPF, the UPF 70 connected to the Central DN 170 may be referred to as a Central-PSA or a C-PSA, and the UPF 80 connected to the Local part of DN 180 may be referred to as a local-PSA or an L-PSA.

The NRF 90 provides a function for a Network Function in the 5G system to discover a service. The AMF 100 performs access management of the terminal and movement management of the terminal. The PCF 110 generates and provides policy rules.

The SMF 120 performs PDU session management. Furthermore, the SMF 120 has a dynamic host configuration protocol (DHCP) function, gives an IP address to the connected UE, and notifies the IP address of the EASDF 160 or the FQDN of the EASDF 160.

The AF 130 provides an application influence on traffic routing service defined in the 3GPP network in cooperation with other Network Functions. In addition, the AF 130 provides EAS Deployment Information via the NEF 140, and the EAS Deployment Information is stored in a unified data repository (UDR). The EAS Deployment Information includes information related to an edge hosting environment (EHE), and specifically includes information related to an EAS or a DNS. The UDR provides services for storing and reading structured data for the NEF 140 and the PCF 110.

The NEF 140 provides a 3GPP network service that can be published to an external environment. The UDM 150 holds confidential information such as user identification information, a password, and authentication information.

The EASDF 160 provides a service equivalent to a Full Resolver as described in IETF RFC 8499. Upon receiving a DNS Query from the UE, the EASDF 160 accesses the DNS server to resolve the queried FQDN. The EASDF 160 is connected to the PSA-UPF at an N6 reference point (user plane), and exchanges a DNS message with the UE 40. The DNS message may be, for example, a DNS Query and a DNS Response.

The Central DN 170 and the Local part of DN 180 are external networks connected to the 5G system. The Central DN 170 may provide, for example, a so-called Internet connection service. The Local part of DN 180 constructs an edge hosting environment (EHE) to implement edge computing. For example, an EAS 190 and a DNS 200 are deployed in the EHE. In addition, the EASDF 160 may also be deployed in the EHE constructed by the Local part of DN 180. A plurality of EASs 190 may be deployed in the EHE constructed by the Local part of DN 180.

The DNS 200 is, for example, a DNS server that receives a DNS Query from the EASDF 160, executes name resolution processing, and notifies the EASDF 160 of a resolution result by using a DNS Response. As a resolution result included in the DNS Response, an IPv4 address of a server (For example, EAS 190) that executes an edge application service is notified in an A record format described in RFC 1035. In the NS record format, the FQDN of the DNS server to be queried is notified. In the CNAME, the FQDN of the alias is notified. In the AAAA record described in RFC 3596, an IPv6 address is notified. In the SRV record described in RFC 2782, the host name and the port number of the server that executes the edge application service are notified.

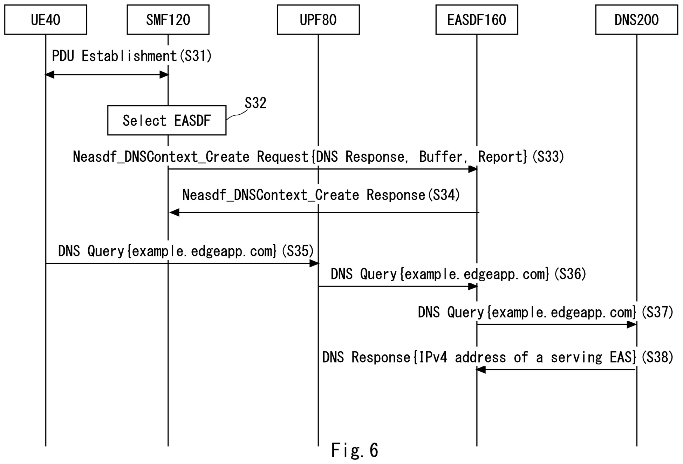

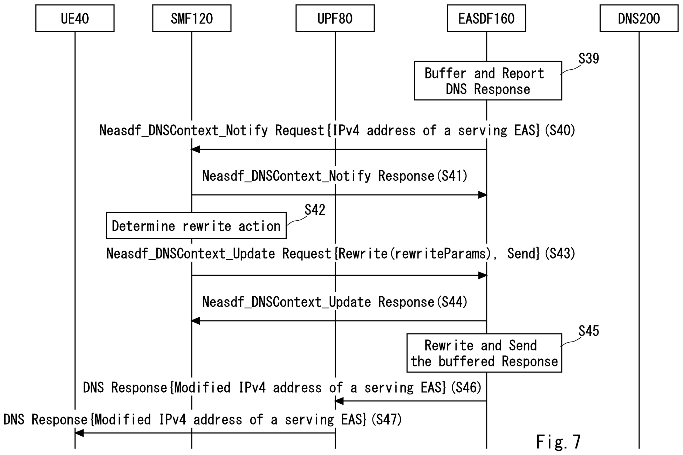

Next, a flow of name resolution processing using the DNS will be described with reference to Figs. 6 and 7. First, the UE 40 executes PDU session establishment processing (PDU session establishment procedure) (S31). Specifically, the UE 40 transmits a non-access stratum (NAS) message including a DN name (DNN) and a PDU Session Establishment Request to the AMF 100. The DNN is a name of a DN that the UE 40 desires to use. The AMF 100 transmits Nsmf_PDUSession_CreateSMContext Request including the DNN and the PDU Session Establishment Request to the SMF 120. It may be paraphrased that the AMF 100 transmits a Request message to invoke the Nsmf_PDUSession_CreateSMContext service in the SMF 120.

The DN is one network infrastructure, and the DN corresponding to one DNN=X is configured by, for example, a plurality of network infrastructures DN#1, DN#2, to DN#i (i is an integer of 2 or more) in an edge computing environment. Each network infrastructure may be geographically distributed. In such a case, the SMF 120 selects an arbitrary network infrastructure DN#i from the plurality of network infrastructures DN#1 to DN#i, and further selects a PSA-UPF connectable to the network infrastructure DN#i.

Here, a selection method of the network infrastructure DN in the SMF 120 will be described. For example, the SMF 120 may select a predetermined network infrastructure DN on the basis of a geographical position of the UE 40. For example, the SMF 120 may select a predetermined network infrastructure DN#a in a case where the UE resides in an area A, and may select a predetermined network infrastructure DN#b in a case where the UE resides in an area B.

Alternatively, the SMF 120 may select the network infrastructure DN in which the geographical position of the UE 40 and the geographical position of the network infrastructure DN (for example, the position of the office building or the data center constituting the network infrastructure DN) are closest. For example, the SMF 120 may specify the positions of the UE 40, the network infrastructure DN#i, and the network infrastructure DN#j by latitude and longitude, and select the network infrastructure DN#i or the network infrastructure DN#j having a short linear distance from the UE.

Alternatively, the SMF 120 may select the network infrastructure DN having the smallest total of the transmission time from the UE 40 to the PSA-UPF and the transmission time from the PSA-UPF to the network infrastructure DN. For example, the SMF 120 selects the network infrastructures DN#i and DN#j as candidates from the designated DNN. The SMF 120 selects the PSA-UPF connectable to the network infrastructure DN#i, and calculates the transmission time from the UE 40 to the network infrastructure DN#i via the selected PSA-UPF. Similarly, the SMF 120 calculates the transmission time from the UE 40 to the network infrastructure DN#j via the selected PSA-UPF. For example, the SMF 120 may calculate the transmission time of each section by using the distance of each section and a predetermined data rate. The data rate between the UE and the PSA-UPF and the data rate between the UPF and the network infrastructure DN may be different rates or may be the same rate. The SMF 120 may select the network infrastructure DN and the PSA-UPF having the shortest transmission time between the UE 40 and the DN as a result of calculation.

In step S31, it is assumed that the SMF 120 selects the Local part of DN 180 as the network infrastructure, and selects the UPF 80 as the PSA-UPF.

Next, the SMF 120 selects an EASDF that can be interconnected with the Local part of DN 180 (S32). Here, it is assumed that the SMF 120 selects the EASDF 160. In addition, the SMF 120 acquires the EAS Deployment Information stored in the UDR, to obtain information related to the EHE constructed in the Local part of DN 180. The SMF 120 may obtain information related to the DNS 200 from the EAS Deployment Information.

Next, the SMF 120 transmits Neasdf_DNSContext_Create Request to the EASDF 160 (S33). It may be paraphrased that the SMF 120 transmits a Request message to invoke the Neasdf_DNSContext_Create service in the EASDF 160. The Neasdf_DNSContext_Create Request may include, for example, an IP address of the UE 40, a subscription permanent identifier (SUPI) of the UE 40, a DNN that the UE 40 desires to use, and DNS message processing information (DNS message handling rules).

The DNS message processing information includes, for example, a detection condition for detecting at least one of the DNS Query and the DNS Response in the EASDF 160, and an action in a case where at least one of the DNS Query and the DNS Response satisfying the detection condition is detected.

The detection condition of the DNS Query may be, for example, the IP address of the UE that has transmitted the DNS Query or the name information of the edge application service for which the UE requests name resolution. The name information is expressed by an FQDN described in IETF RFC 8499, and may be expressed as, for example, example.edgeapp.com. In a case where the DNS Query includes information defined as a detection condition, the EASDF 160 detects the DNS Query.

The detection condition of the DNS Response may be the IP address of the UE as a transmission destination of the DNS Response, or the name resolution result of the edge application service for which name resolution is requested in the DNS Query. The name resolution result may be, for example, an IP address, and a plurality of IP addresses may be included as the detection condition. Alternatively, the name resolution result may be an FQDN. In a case where the DNS Response includes information defined as a detection condition, the EASDF 160 detects the DNS Response.

The action may include, for example, at least one of Forward, Buffer, Send, Report, Discard, and Rewrite. In a case where "Forward" is designated as an action, the EASDF 160 forwards the DNS Query satisfying the detection condition of the DNS Query to the DNS 200.

In a case where "Buffer" is designated as an action, the EASDF 160 holds a DNS Query satisfying the detection condition of the DNS Query or a DNS Response satisfying the detection condition of the DNS Response. Holding the DNS Query or DNS Response by the EASDF 160 may be paraphrased as holding, storing, recording, or saving the DNS Query or DNS Response. The EASDF 160 may hold a DNS Query or DNS Response in an apparatus different from the EASDF 160, or may hold the DNS Query or DNS Response in an internal memory of the EASDF 160.

In a case where "Send" is designated as an action, the EASDF 160 transmits the held DNS Query to the DNS 200 or transmits the held DNS Response to the UE 40. In a case where "Report" is designated as an action, the EASDF 160 notifies the SMF 120 that the DNS Query or DNS Response is detected. At this time, the EASDF 160 may transmit the DNS Query or DNS Response to the SMF 120, or may transmit a message including a parameter or the like included in the DNS Query or DNS Response to the SMF 120.

In a case where the parameter "Discard" designating discarding of the received DNS Query is designated as an action, the EASDF 160 discards the received DNS Query. In a case where the parameter "Rewrite" designating rewriting of the name resolution result included in the DNS Response is designated as an action, the EASDF 160 rewrites the name resolution result included in the DNS Response into the designated information.

It is assumed that Neasdf_DNSContext_Create Request transmitted in step S33 includes, as the DNS message processing information, the detection condition for detecting the DNS Response, and the Buffer and Report as the actions in a case where the DNS Response is detected. The detection condition for detecting the DNS Response may be, for example, an IP address given by the SMF 120 to the UE 40. That is, the EASDF 160 detects the DNS Response of which the destination address is the IP address of the UE 40. Alternatively, the detection condition for detecting the DNS Response may be at least one IP address obtained by performing the name resolution of the FQDN indicated as example.edgeapp.com. In a case where the service indicated by example.edgeapp.com is provided by a plurality of network infrastructures, the IP address of the server apparatus deployed in any network infrastructure can be obtained by performing the name resolution of the FQDN.

Next, the EASDF 160 transmits Neasdf_DNSContext_Create Response (S34). It may be paraphrased that the EASDF 160 transmits, from the SMF 120, a Response message to a Request message received regarding the Neasdf_DNSContext_Create service.

After Neasdf_DNSContext_Create Response is received, the SMF 120 may transmit, to the UE 40, a PDU Session Establishment Accept message including the IP address of the EASDF 160 that provides the service equivalent to the Full Resolver. Alternatively, in a case where the DHCP function is provided, the SMF 120 may transmit, to the UE 40, the IP address of the DNS 200 including the IP address assigned to the UE 40 and the IP address of the EASDF 160. Alternatively, in a case where the DHCP function is provided, the SMF 120 may transmit, to the UE 40, the IP address of the DNS 200 including the IP address assigned to the UE 40 or the IP address of the EASDF 160. Instead of the IP address of the DNS 200, the FQDN of the DNS 200 may be transmitted to the UE 40. The transmission of the address information to the UE 40 using the DHCP function may be performed after step S34 or may be performed in step S31.

Next, the UE 40 transmits a DNS Query addressed to the EASDF 160 notified from the SMF 120, to the UPF 80 (S35). The DNS Query includes, for example, a name of the edge application service of example.edgeapp.com. The UE 40 transmits a DNS Query to obtain, by the name resolution, the IP address associated with example.edgeapp.com. The DNS Query is transferred to the UPF 80, which is a Local PSA UPF, as user data on the PDU Session. The UPF 80 is connected with the Local part of DN 180 that provides the edge application service of example.edgeapp.com.

Next, the UPF 80 transfers the DNS Query to the EASDF 160 according to the destination of the DNS Query (S36).

Next, the EASDF 160 forwards the DNS Query to the DNS 200 (S37). In step S33, the EASDF 160 does not receive the detection condition of the DNS Query. Therefore, the EASDF 160 forwards the received DNS Query to the DNS 200. Alternatively, in step S33, in a case where the detection condition of the DNS Query and "Forward" as the action in a case where the DNS Query is detected are received, the EASDF 160 may detect the DNS Query and forward the detected DNS Query to the DNS 200. The DNS 200 is a DNS server deployed in the Local part of DN 180 that provides the edge application service of example.edgeapp.com.

Next, the DNS 200 transmits the DNS Response including the name resolution result related to example.edgeapp.com to the EASDF 160 (S38). The name resolution result may be, for example, the IP address of the EAS that provides example.edgeapp.com. The IP address may be an IPv4 address or an IPv6 address.

The edge application service, example.edgeapp.com, implements load balancing by performing the service using a plurality of EASs. The plurality of EASs may be indicated as, for example, EAS#1 to EAS#n (n is an integer of 2 or more). #1 to #n are names for identifying the EAS. For the load balancing, for example, DNS round robin is applied. Specifically, in a case where a DNS Query including example.edgeapp.com is first received, the DNS 200 transmits a DNS Response including the IP address of EAS#1 to the EASDF 160. In a case where a second DNS Query including example.edgeapp.com is received, the DNS 200 transmits a DNS Response including the IP address of EAS#2 to the EASDF 160. In a case where an n-th DNS Query including example.edgeapp.com is received, the DNS 200 transmits a DNS Response including the IP address of EAS#n to the EASDF 160. As described above, in a case where the DNS Query including the same FQDN is received a plurality of times, the DNS 200 transmits the DNS Response including the IP address of the different EASs to the EASDF 160 in order, for example.

Here, the EASDF 160 determines that the IP address included in the DNS Response satisfies the detection condition of the DNS Response designated in step S33 (S39). In such a case, the EASDF 160 specifies that, in step S33, "Buffer" and "Report" are designated as actions in a case where the detection condition of the DNS Response is satisfied (S39). Therefore, the EASDF 160 holds the DNS Response received in step S38 according to the action of "Buffer".

Next, according to the action of "Report", the EASDF 160 transmits Neasdf_DNSContext_Notify Request indicating that the DNS Response received in step S38 satisfies the detection condition of the DNS Response, to the SMF 120 (S40). In other words, the EASDF 160 notifies the SMF 120 of an event that the DNS Response satisfying the detection condition of the DNS Response is received. The EASDF 160 transmits Neasdf_DNSContext_Notify Request including an IP address that is a name resolution result included in the DNS Response, to the SMF 120. Furthermore, the EASDF 160 may include, in Neasdf_DNSContext_Notify Request, the identification information indicating that the notification is related to the request message in step S33. Alternatively, the EASDF 160 may include, in the Neasdf_DNSContext_Notify Request, the identification information indicating that the notification is related to the DNS message processing information included in the request message in step S33.

Next, the SMF 120 transmits Neasdf_DNSContext_Notify Response to the EASDF 160 as a response to Neasdf_DNSContext_Notify Request (S41).

Next, in a case where the detection of the DNS Response is notified, the SMF 120 executes "Rewrite" as an action for instructing the EAS used in the edge application service, example.edgeapp.com, to the EASDF 160 (S42). In the Rewrite action, the IP address or the FQDN included in the DNS Response is rewritten using new rewriteParams information. The rewriteParams information is information including the rewritten IP address or FQDN. The SMF 120 uses the rewriteParams information to cause a plurality of UEs to use the same EAS in the edge application service. The SMF 120 rewrites the IP address of the EAS accessed by each of the plurality of UEs for using the service, into the IP address of the same EAS. As a result, the same EAS can be used by a plurality of UEs, and the quality of service can be uniform. In other words, the SMF 120 notifies each UE of the same IP address or FQDN so that a plurality of UEs belonging to the same group may use the same EAS. It is assumed that a plurality of UEs using the same edge application service belongs to the same group. It is assumed that each group is identified by identification information such as a group ID. In this case, the SMF 120 may obtain the group ID to which the UE belongs, from the AMF 100, the UDM 150, or the like, or the group ID may be included in the PDU Session Establishment Request message received from the UE.

Here, a method of deciding the information related to the EAS included in the rewriteParams information will be described. As a first method, the EAS is determined in advance, and every time Neasdf_DNSContext_Notify Request is received from the EASDF 160, the decided IP address or FQDN of the EAS is described in the rewriteParams information.

As a second method, in a case where the first DNS Response for a certain edge application service is detected in the EASDF 160, the SMF 120 may hold the IP address or the FQDN indicated in the name resolution result. In this case, in a case where the second or subsequent DNS Response for a certain edge application service is detected and a notification of detection of the DNS Response is received, the SMF 120 describes the held IP address or FQDN in the rewriteParams information. The IP address or the FQDN transmitted to each of the plurality of communication terminals is the IP address or the FQDN of the EAS indicated in the result of the name resolution performed first.

As a third method, in a case where the first DNS Response for a certain edge application service is detected in the EASDF 160 and a notification of detection of the DNS Response is received, information of a plurality of EASs may be acquired from a management system that manages the EAS. In this case, the SMF 120 selects information of an arbitrary EAS from information of the plurality of EASs, and holds the selected information of the EAS. The SMF 120 describes the selected and held IP address or FQDN of the EAS in the rewriteParams information.

As a fourth method, in the third method, the load information of each EAS acquired from the management system is also acquired. For example, the information related to EAS performance assurance described in 3GPP TS28.538 Edge Computing Management (ECM) is available. The SMF 120 selects and holds an EAS with a light load. The SMF 120 describes the selected and held IP address or FQDN of the EAS in the rewriteParams information. The IP address or the FQDN transmitted to each of the plurality of communication terminals is the IP address or the FQDN of the EAS having the smallest load among the plurality of EASs.

As a fifth method, an IP address or an FQDN of a different EAS is selected for each group to which the UE belongs. That is, for a plurality of UEs belonging to the same group, an IP address or an FQDN of a common EAS is selected. In this case, the SMF 120 may receive Neasdf_DNSContext_Notify Request including group information indicating a group to which the UE belongs. In addition, the UE may notify the SMF 120 of information indicating the group to which the UE belongs in step S31. Alternatively, the SMF 120 may acquire the information related to the group name to which the UE 40 belongs, from the UDM after step S31.

Next, the SMF 120 transmits Neasdf_DNSContext_Update Request to the EASDF 160 (S43). It may be paraphrased that the SMF 120 transmits a Request message to invoke the Neasdf_DNSContext_Update service in the EASDF 160. Neasdf_DNSContext_Update Request includes the DNS message processing information. The DNS message processing information includes "Rewrite" instructing an action of rewriting the name resolution result of example.edgeapp.com that is the edge application service, and the rewriteParams information that is rewritten information (for example, identification information of the EAS, and the like). Furthermore, the DNS message processing information includes "Send" instructing an action of transmitting the name resolution result to the UE 40 after rewriting the name resolution result.

In addition, in order to indicate that the DNS message processing information notified in step S33 is updated, the SMF 120 may include identification information indicating the DNS message processing information notified in step S33, in Neasdf_DNSContext_Update Request. Alternatively, the SMF 120 may include identification information indicating Neasdf_DNSContext_Create Request transmitted in step S33, in Neasdf_DNSContext_Update Request.

Next, the EASDF 160 transmits, to the SMF 120, Neasdf_DNSContext_Update Response as a response to Neasdf_DNSContext_Update Request (S44).

Next, the EASDF 160 specifies that "Rewrite" and "Send" are designated as actions to be executed in Neasdf_DNSContext_Update Request (S45). Therefore, the EASDF 160 rewrites the name resolution result included in the DNS Response received from the DNS 200 into the information included in the rewriteParams information.

Next, the EASDF 160 transmits the DNS Response in which the name resolution result is rewritten, to the UPF 80 according to the designated Send action (S46). The address of the UE 40 is set as the destination of the DNS Response. Next, the UPF 80 transfers the DNS Response to the UE 40 according to the destination information (S47).

As described above, in the communication system, the SMF 120 rewrites the name resolution result included in the DNS Response transmitted from the DNS 200. Furthermore, the EASDF 160 transmits the DNS Response including the rewritten name resolution result to the UE 40.

The SMF 120 can provide services of substantially the same quality to a plurality of UEs that use the same edge computing service, for example, by designating a specific EAS among a plurality of EASs that execute the edge computing service. In addition, in a case where a plurality of UEs using the same edge computing service operate in cooperation, in a case where each of the UEs is connected to a different EAS, cooperation between the EASs may be required. On the other hand, a plurality of UEs using the same edge computing service uses the same EAS, so that even in a case where a plurality of UEs operate in cooperation, the occurrence of cooperation processing between EASs can be suppressed.

In addition, in a case where a predetermined quality can be maintained even in a case where a plurality of EASs provide the same edge computing service to a plurality of UEs, the SMF 120 may rewrite the name resolution result into an address of an arbitrary EAS such as an EAS having a low load. As a result, it is possible to operate the communication system in consideration of load balancing.

### (Third Example Embodiment)

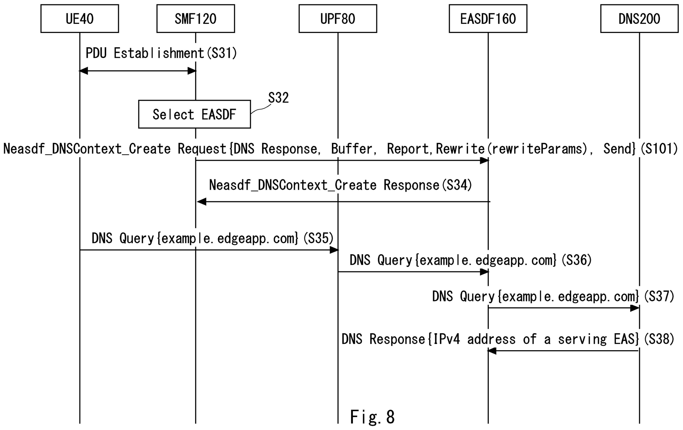

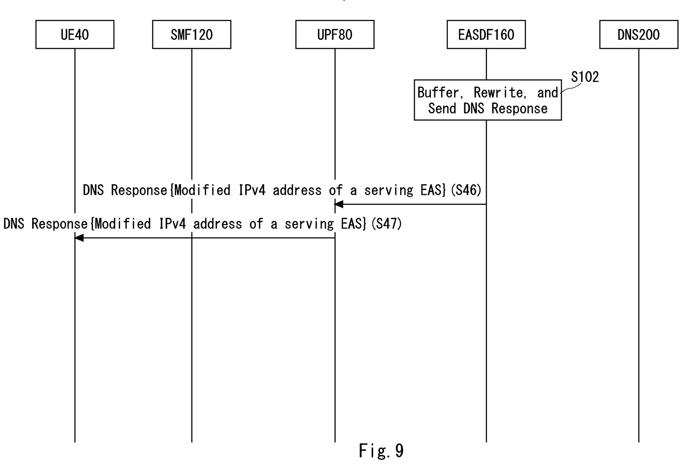

Next, a flow of name resolution processing using the DNS will be described with reference to Figs. 8 and 9. Since steps S31 and S32 are similar to steps S31 and S32 in Fig. 6, a description thereof is omitted.

Next, in Fig. 8, step S101 is executed instead of step S33 in Fig. 6. It is assumed that the SMF 120 determines the EAS to be used in advance at the time of executing step S32. In this case, in step S101, the SMF 120 may transmit, to the EASDF 160, Neasdf_DNSContext_Create Request in which the DNS message processing information including Rewrite and Send actions is set in addition to the Buffer action. Furthermore, the SMF 120 describes the IP address or FQDN of the predetermined EAS in the rewriteParams information.

Since steps S34 to S38 are similar to steps S34 to S38 in Fig. 6, a detailed description thereof will be omitted.

Next, the EASDF 160 determines that the IP address included in the DNS Response satisfies the detection condition of the DNS Response designated in step S101 (S102). In such a case, the EASDF 160 specifies that, in step S101, "Buffer", "Rewrite", and "Send" are designated as actions in a case where the detection condition of the DNS Response is satisfied (S102). Therefore, the EASDF 160 holds the DNS Response received in step S38 according to the action of "Buffer". Furthermore, the EASDF 160 rewrites the name resolution result included in the DNS Response into the rewriteParams information notified in step S101.

After step S102, the EASDF 160 executes steps S46 and S47 in Fig. 7.

As described above, in a case where the EAS to be used is determined in advance, the SMF 120 notifies the EASDF 160 of the rewriteParams information indicating the determined EAS, the Rewrite action, and the Send action before receiving the DNS Query. As a result, the number of messages transmitted between the SMF 120 and the EASDF 160 can be reduced as compared with the second example embodiment. As a result, it is possible to realize an increase in speed of communication processing, a reduction in a processing load in the SMF 120, and the like.

### (Fourth Example Embodiment)

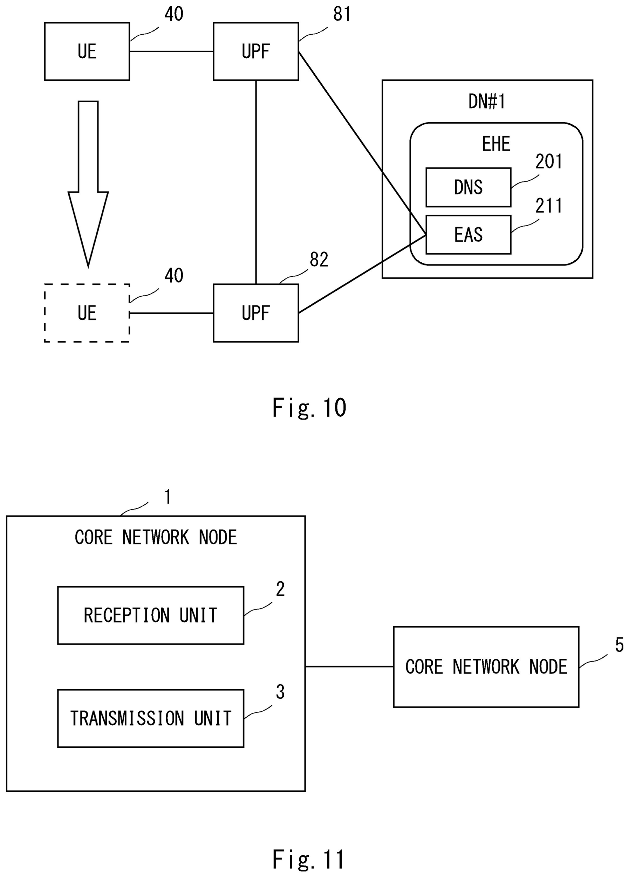

Next, an operation in a case where the UE 40 performs the movement accompanied by the change of the UPF will be described with reference to Fig. 10. Fig. 10 illustrates that the UE 40 has moved. Before the movement, the UE 40 is connected to an EAS 211 via an UPF 81 as the PSA-UPF. In a case where it is detected that the UE 40 has moved, the SMF 120 may select the UPF by a method similar to the selection method of the network infrastructure DN performed in step S31 of Fig. 6. Here, the SMF 120 continues to select the DN to which the UE 40 has been connected before moving. That is, the SMF 120 assumes that the EHE to which the UE 40 is connected is a DNS 201 and the EAS 211, and the EAS 211 to be the connection destination of the UE 40 is not changed. For example, the SMF 120 may be notified of the movement of the UE 40 from the AMF 100.

In this case, the SMF 120 selects the UPF so that the path between the UE 40 and the EAS 211 is optimized. The fact that the path is optimized may mean that the distance of the path is the shortest, the transmission time is the shortest, or the like. For example, the SMF 120 may newly select, instead of the UPF 81, a UPF 82 as the PSA-UPF after the UE 40 moves. Alternatively, the SMF 120 may select the UPF 81 as the PSA-UPF as before the UE 40 moves. In a case where the UPF 81 is selected as the PSA-UPF, the SMF 120 may set the UPF 82 as the UL CL/BP and establish a PDU session from the UE 40 to the UPF 81 via the UPF 82.

As described above, even in a case where the UE 40 has moved, the SMF 120 can select the PSA-UPF to be connected to the same EAS as that before the movement and establish a new PDU session. As a result, the UE 40 can continuously receive the edge computing service from the same EAS before and after the movement.

### (Fifth Example Embodiment)

A configuration example of a core network node 1 will be described with reference to Fig. 11. The core network node 1 may be a computer apparatus that operates in a case where a processor executes a program stored in a memory. The core network node 1 may be, for example, a node constituting a mobile network. The node may correspond to a physical entity (apparatus) or a logical function (function). For example, the core network node 1 may be an SMF, but is not limited thereto as long as the node belongs to the core network.

The core network node 1 includes a reception unit 2 and a transmission unit 3. The reception unit 2 and the transmission unit 3 may be software components or modules whose processing is carried out by causing the processor to execute the program stored in the memory. Alternatively, the reception unit 2 and the transmission unit 3 may be hardware components such as circuits or chips.

The reception unit 2 receives, from a core network node 5, a name resolution result including first identification information related to a network apparatus that provides an edge application service used by a first communication terminal in a group including a plurality of communication terminals. For example, the core network node 5 may be an EASDF, but is not limited thereto as long as the node belongs to the core network.

The transmission unit 3 transmits the second identification information corresponding to the group of the plurality of communication terminals (hereinafter, also referred to as a communication terminal group), to the core network node 5.

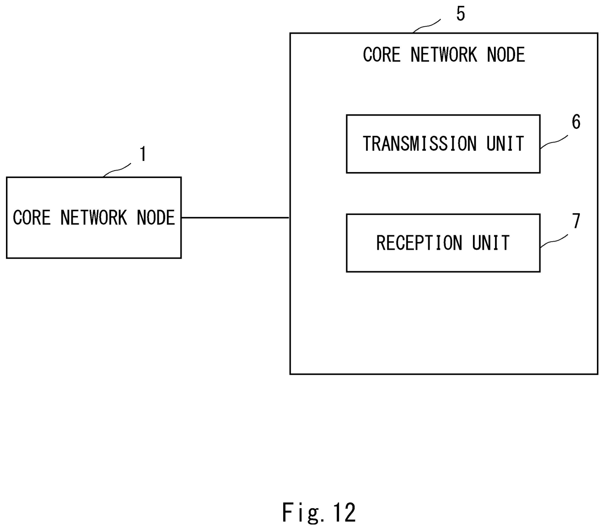

Next, a configuration example of the core network node 5 will be described using Fig. 12. The core network node 5 may be a computer apparatus that operates in a case where a processor executes a program stored in a memory. The core network node 5 may be, for example, a node constituting a mobile network. The node may correspond to a physical entity (apparatus) or a logical function (function). For example, the core network node 5 may be an EASDF, but is not limited thereto as long as the node belongs to the core network.

The core network node 5 includes a transmission unit 6 and a reception unit 7. The transmission unit 6 and the reception unit 7 may be software components or modules whose processing is executed by causing the processor to execute the program stored in the memory. Alternatively, the transmission unit 6 and the reception unit 7 may be hardware components such as circuits or chips.

The transmission unit 6 transmits, to the core network node 1, the name resolution result including the first identification information related to the network node that provides the edge application service used by the first communication terminal in the group including a plurality of communication terminals. For example, the core network node 1 may be an SMF, but is not limited thereto as long as the node belongs to the core network.

The reception unit 7 receives the second identification information corresponding to the group of the plurality of communication terminals (hereinafter, also referred to as a communication terminal group).

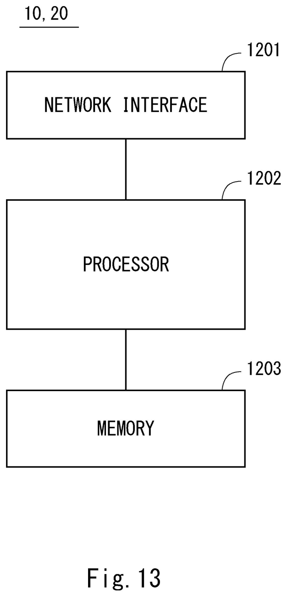

Fig. 13 is a block diagram illustrating a configuration example of the core network node 10 and the core network node 20 (hereinafter referred to as the core network node 10 or the like). Referring to Fig. 13, the core network node 10 or the like includes a network interface 1201, a processor 1202, and a memory 1203. The network interface 1201 may be used to communicate with network nodes. The network interface 1201 may include, for example, a network interface card (NIC) conforming to IEEE 802.3 series. The IEEE represents Institute of Electrical and Electronics Engineers.

The processor 1202 executes the processing in the communication apparatus 10 or the like described using the flowcharts, by reading software (computer programs) from the memory 1203 and executing the software. The processor 1202 may be, for example, a microprocessor, a micro processing unit (MPU), or a central processing unit (CPU). The processor 1202 may include a plurality of processors.

The memory 1203 includes a combination of a volatile memory and a nonvolatile memory. The memory 1203 may include a storage disposed away from the processor 1202. In this case, the processor 1202 may access the memory 1203 through an input/output (I/O) interface (not illustrated).

In the example of Fig. 13, the memory 1203 is used to store a software module group. The processor 1202 can perform the processing of the core network node 10 or the like by reading the software module group from the memory 1203 and executing the software module group.

As described with reference to Fig. 13, each of the processors included in the core network node 10 or the like executes one or a plurality of programs including a command group causing a computer to perform an algorithm described with reference to the drawings.

In the above-described example, the program includes a command group (or software codes) for causing a computer to perform one or more functions in a case where the program is read by the computer. The program may be stored in a non-transitory computer-readable medium or a tangible storage medium. As an example and not by way of limitation, the computer-readable medium or the tangible storage medium includes a random access memory (RAM), a read only memory (ROM), a flash memory, a solid-state drive (SSD) or any other memory technology, a CD-ROM, a digital versatile disc (DVD), a Blu-ray (registered trademark) disc or any other optical disk storage, a magnetic cassette, a magnetic tape, a magnetic disk storage, and any other magnetic storage device. The program may be transmitted through a transitory computer-readable medium or a communication medium. As an example and not by way of limitation, the transitory computer-readable medium or the communication medium includes electrical, optical, acoustic, or other forms of propagated signals.

Although the present disclosure has been described hitherto with reference to the example embodiments, the present disclosure is not limited to the example embodiments described above. Various modifications that can be understood by those skilled in the art can be made to the configurations and details of the present disclosure within the scope of the present disclosure. Each example embodiment can be appropriately combined with another example embodiment.

Each of the drawings is merely an example to illustrate one or more example embodiments. Each of the drawings is not associated with only one specific example embodiment, but may be associated with one or more other example embodiments. As those ordinary skilled in the art will appreciate, various features or steps described with reference to any one of the drawings may be combined with features or steps illustrated in one or more other drawings, for example, to create an example embodiment that is not explicitly illustrated or described. All of the features or steps illustrated in any one of the figures for describing illustrative example embodiments are not necessarily mandatory, and some features or steps may be omitted. The order of the steps described in any of the figures may be changed as appropriate.

Some or all of the above-described example embodiments may be described as in the following Supplementary Notes, but are not limited to the following Supplementary Notes.

### (Supplementary Note 1)

A core network node including:
a reception unit configured to receive, from a first core network node, a name resolution result including first identification information related to a network apparatus that provides an edge application service used by a first communication terminal in a group including a plurality of communication terminals; and
a transmission unit configured to transmit second identification information corresponding to the group, to the first core network node.

### (Supplementary Note 2)

The core network node according to Supplementary Note 1, further including a change unit configured to change the first identification information to the second identification information.

### (Supplementary Note 3)

The core network node according to Supplementary Note 2, in which the second identification information is identification information for the communication terminal on which name resolution is first executed, among the plurality of communication terminals.

### (Supplementary Note 4)

The core network node according to Supplementary Note 3, in which the communication terminal on which the name resolution is first executed is the communication terminal on which the name resolution is first executed after a timer is started for the group.

### (Supplementary Note 5)

The core network node according to Supplementary Note 3, in which the second identification information is identification information that is first received as a result of the name resolution executed for the plurality of communication terminals.

### (Supplementary Note 6)

The core network node according to Supplementary Note 4, in which the second identification information is identification information selected from a plurality of pieces of identification information in a case where a result of the name resolution executed for the plurality of communication terminals is first received.

### (Supplementary Note 7)

The core network node according to any one of Supplementary Notes 1 to 6, in which the transmission unit transmits, to the first core network node, an instruction message for instructing a change of the first identification information, which is to be held in the first core network node, to the second identification information.

### (Supplementary Note 8)

The core network node according to Supplementary Note 7, in which the instruction message includes a parameter for the first core network node to execute the change.

### (Supplementary Note 9)

A core network node including:
a transmission unit configured to transmit, to a first core network node, a name resolution result including first identification information related to a network apparatus that provides an edge application service used by a first communication terminal in a group including a plurality of communication terminals; and
a reception unit configured to receive second identification information corresponding to the group,
in which the transmission unit transmits the second identification information to the first communication terminal in a case where the second identification information is received.

### (Supplementary Note 10)

The core network node according to Supplementary Note 9, in which the reception unit receives an instruction message for instructing a change of the first identification information, which is to be held in the core network node, to the second identification information.

### (Supplementary Note 11)

The core network node according to Supplementary Note 10, in which the instruction message includes a parameter for the core network node to execute the change.

### (Supplementary Note 12)

A communication system including:
a first core network node configured to transmit, to a second core network node, a name resolution result including first identification information related to a network apparatus that provides an edge application service used by a first communication terminal in a group including a plurality of communication terminals; and
the second core network node configured to receive the name resolution result and transmit second identification information corresponding to the group to the first core network node,
in which the first core network node transmits the second identification information to the first communication terminal in a case where the second identification information is received.

### (Supplementary Note 13)

The communication system according to Supplementary Note 12, in which the second core network node changes the first identification information to the second identification information.

### (Supplementary Note 14)

A communication method including:
receiving, from a first core network node, a name resolution result including first identification information related to a network apparatus that provides an edge application service used by a first communication terminal in a group including a plurality of communication terminals; and
transmitting second identification information corresponding to the group, to the first core network node.

### (Supplementary Note 15)

The communication method according to Supplementary Note 14, in which after the first identification information is received, the first identification information is changed to the second identification information.

### (Supplementary Note 16)

The communication method according to Supplementary Note 15, in which the second identification information is identification information for the communication terminal on which name resolution is first executed, among the plurality of communication terminals.

### (Supplementary Note 17)

The communication method according to Supplementary Note 16, in which the communication terminal on which the name resolution is first executed is the communication terminal on which the name resolution is first executed after a timer is started for the group.

### (Supplementary Note 18)

The communication method according to Supplementary Note 16, in which the second identification information is identification information that is first received as a result of the name resolution executed for the plurality of communication terminals.

### (Supplementary Note 19)

The communication method according to Supplementary Note 15, in which the second identification information is identification information selected from a plurality of pieces of identification information in a case where a result of the name resolution executed for the plurality of communication terminals is first received.

### (Supplementary Note 20)

The communication method according to any one of Supplementary Notes 14 to 19, in which in a case where the second identification information is transmitted, an instruction message for instructing a change of the first identification information, which is to be held in the first core network node, to the second identification information is transmitted to the first core network node.

### (Supplementary Note 21)

The communication method according to Supplementary Note 20, in which the instruction message includes a parameter for the first core network node to execute the change.

### (Supplementary Note 22)

A communication method including:
transmitting, to a first core network node, a name resolution result including first identification information related to a network apparatus that provides an edge application service used by a first communication terminal in a group including a plurality of communication terminals;
receiving second identification information corresponding to the group; and
transmitting the second identification information to the first communication terminal.

### (Supplementary Note 23)

The communication method according to Supplementary Note 22, in which in a case where the second identification information is received, an instruction message for instructing a change of the first identification information, which is to be held in the core network node, to the second identification information is received.

### (Supplementary Note 24)

The communication method according to Supplementary Note 23, in which the instruction message includes a parameter for the core network node to execute the change.

### (Supplementary Note 25)

A program for causing a computer to execute:
receiving, from a first core network node, a name resolution result including first identification information related to a network apparatus that provides an edge application service used by a first communication terminal in a group including a plurality of communication terminals; and
transmitting second identification information corresponding to the group, to the first core network node.

### (Supplementary Note 26)

A program for causing a computer to execute:
transmitting, to a first core network node, a name resolution result including first identification information related to a network apparatus that provides an edge application service used by a first communication terminal in a group including a plurality of communication terminals;
receiving second identification information corresponding to the group; and
transmitting the second identification information to the first communication terminal.

Some or all of the elements (such as configurations and functions, for example) described in Supplementary Notes 15 to 21 dependent on Supplementary Note 14 may be dependent on Supplementary Note 25 in the same dependency relationship as Supplementary Notes 15 to 21. In addition, some or all of the elements (such as configurations and functions, for example) described in Supplementary Notes 23 and 24 dependent on Supplementary Note 22 may be dependent on Supplementary Note 26 in the same dependency relationship as Supplementary Notes 23 and 24. Some or all of the elements described in any Supplementary Note may be applied to various types of hardware, software, recording means for recording software, systems, and methods.

This application claims priority based on Japanese Patent Application No. 2022-211058 filed on December 28, 2022, the entire disclosure of which is incorporated herein.

### Reference Signs List

- 1: CORE NETWORK NODE
- 2: RECEPTION UNIT
- 3: TRANSMISSION UNIT
- 5: CORE NETWORK NODE
- 6: TRANSMISSION UNIT
- 7: RECEPTION UNIT
- 10: CORE NETWORK NODE
- 11: RECEPTION UNIT
- 12: CHANGE UNIT
- 13: TRANSMISSION UNIT
- 20: CORE NETWORK NODE
- 21: RECEPTION UNIT
- 22: TRANSMISSION UNIT
- 30: COMMUNICATION TERMINAL
- 40: UE
- 50: AN
- 60: UPF
- 70: UPF
- 80: UPF
- 81: UPF
- 82: UPF
- 90: NRF
- 100: AMF
- 110: PCF
- 120: SMF
- 130: AF
- 140: NEF
- 150: UDM
- 160: EASDF
- 170: Central DN
- 180: Local part of DN
- 190: EAS
- 200: DNS
- 201: DNS
- 211: EAS

## Claims

1. A core network node comprising:
reception means for receiving, from a first core network node, a name resolution result including first identification information related to a network apparatus that provides an edge application service used by a first communication terminal in a group including a plurality of communication terminals; and
transmission means for transmitting second identification information corresponding to the group, to the first core network node.

2. The core network node according to claim 1, further comprising change means for changing the first identification information to the second identification information.

3. The core network node according to claim 2, wherein the second identification information is identification information for the communication terminal on which name resolution is first executed, among the plurality of communication terminals.

4. The core network node according to claim 3, wherein the communication terminal on which the name resolution is first executed is the communication terminal on which the name resolution is first executed after a timer is started for the group.

5. The core network node according to claim 3, wherein the second identification information is identification information that is first received as a result of the name resolution executed for the plurality of communication terminals.

6. The core network node according to claim 4, wherein the second identification information is identification information selected from a plurality of pieces of identification information in a case where a result of the name resolution executed for the plurality of communication terminals is first received.

7. The core network node according to any one of claims 1 to 6, wherein the transmission means transmits, to the first core network node, an instruction message for instructing a change of the first identification information, which is to be held in the first core network node, to the second identification information.

8. The core network node according to claim 7, wherein the instruction message includes a parameter for the first core network node to execute the change.

9. A core network node comprising:
transmission means for transmitting, to a first core network node, a name resolution result including first identification information related to a network apparatus that provides an edge application service used by a first communication terminal in a group including a plurality of communication terminals; and
reception means for receiving second identification information corresponding to the group,
wherein the transmission means transmits the second identification information to the first communication terminal in a case where the second identification information is received.

10. The core network node according to claim 9, wherein the reception means receives an instruction message for instructing a change of the first identification information, which is to be held in the core network node, to the second identification information.

11. A communication system comprising:
a first core network node configured to transmit, to a second core network node, a name resolution result including first identification information related to a network apparatus that provides an edge application service used by a first communication terminal in a group including a plurality of communication terminals; and
the second core network node configured to receive the name resolution result and transmit second identification information corresponding to the group to the first core network node,
wherein the first core network node transmits the second identification information to the first communication terminal in a case where the second identification information is received.

12. A communication method comprising:
receiving, from a first core network node, a name resolution result including first identification information related to a network apparatus that provides an edge application service used by a first communication terminal in a group including a plurality of communication terminals; and
transmitting second identification information corresponding to the group, to the first core network node.

13. The communication method according to claim 12, wherein after the first identification information is received, the first identification information is changed to the second identification information.

14. The communication method according to claim 13, wherein the second identification information is identification information for the communication terminal on which name resolution is first executed, among the plurality of communication terminals.

15. The communication method according to claim 14, wherein the communication terminal on which the name resolution is first executed is the communication terminal on which the name resolution is first executed after a timer is started for the group.

16. The communication method according to claim 14, wherein the second identification information is identification information that is first received as a result of the name resolution executed for the plurality of communication terminals.

17. The communication method according to claim 13, wherein the second identification information is identification information selected from a plurality of pieces of identification information in a case where a result of the name resolution executed for the plurality of communication terminals is first received.

18. The communication method according to any one of claims 12 to 17, wherein in a case where the second identification information is transmitted, an instruction message for instructing a change of the first identification information, which is to be held in the first core network node, to the second identification information is transmitted to the first core network node.

19. The communication method according to claim 18, wherein the instruction message includes a parameter for the first core network node to execute the change.

20. A program for causing a computer to execute:
receiving, from a first core network node, a name resolution result including first identification information related to a network apparatus that provides an edge application service used by a first communication terminal in a group including a plurality of communication terminals; and
transmitting second identification information corresponding to the group, to the first core network node.
